# EUROPÄISCHE PATENTANMELDUNG

(11) **EP 0 718 953 A2**
(43) Veröffentlichungstag der Anmeldung: **26.06.1996**
(21) Anmeldenummer: 95119799.5
(22) Anmeldetag: 15.12.1995
(51) Int. Cl.: H02J 13/00

(54) **Fernwirkgerät und Fernwirkeinheit**

(30) Priorität: 21.12.1994 DE 4445616
(71) Anmelder: Alcatel SEL Aktiengesellschaft, D-70435 Stuttgart (DE)
(72) Erfinder: König, Werner, D-74392 Freudental (DE); Forcht, Dominikus, D-71634 Ludwigsburg (DE)
(74) Vertreter: Schätzle, Albin, Dipl.-Phys.

(57) **Zusammenfassung**

Es ist ein Fernwirknetz (FWN) mit einer Zentrale (ZE), die ein Fernwirkgerät (FWG) und eine Benutzerzugriffseinrichtung (UAE) beinhaltet, und mit mehreren Unterstationen (US1, US2, US3), die jeweils eine Fernwirkeinheit (FWE) und mehrere Netzbetriebsmittel (NBM1, NBM2, NBM3, NBM4) beinhaltet, angegeben. Die Netzbetriebsmittel (NBM) werden über das Fernwirkgerät (FWG) ferngesteuert und fernüberwacht. Dazu erhält jedes Netzbetriebsmittel (NBM) eine individuelle Adresse und eine Zuordnung zu einer Kategorie. Die Übertragung der Steuer- und Überwachungsinformationen erfolgt zwischen Fernwirkeinheit (FWE) und Fernwirkgerät (FWG) über ein Protkoll, das die Nutzerdaten, die individuelle Adresse und die Kategorie des jeweiligen Netzbetriebsmittels (NBM) enthält. Über die Benutzerzugriffseinrichtung (UAE) kann auf die zentrale Steuereinrichtung (ZSE) des Fernwirkgerätes (FWG) zugegriffen werden, um z.B. gezielt nur Netzbetriebsmittel (NBM) einer vorgegebenen Kategorie zu überwachen und zu steuern.

## Beschreibung

Die Erfindung betrifft ein Fernwirkgerät und eine Fernwirkeinheit zur Fernsteuerung und Fernüberwachung von Netzbetriebsmitteln eines Versorgungsnetzes.

In dem Buch "Netzleittechnik" (1989), von D. Rumpel und R. Sun ist auf den Seiten 51-58 der Aufbau einer zeitmultiplexen Fernwirkverbindung zwischen einer Unterstation und einer Zentrale eines Fernmwirknetzes beschrieben. Das Fernwirknetz dient der Fernüberwachung und Fernsteuerung eines Versorgungsnetzes. Das Versorgungsnetz ist z.B. ein Energie-, Wasser- oder Fernwärmeversorgungsnetz. Eine Unterstation beinhaltet mehrere Netzbetriebsmittel, z.B. Hochspannungsschalter und ein Fernwirkgerät. Zwecks Fernüberwachung des Versorgungsnetzes werden die Betriebszustände der Netzbetriebsmittel, z.B. die Stellungen der Hochspannungsschalter überwacht. Die daraus resultierenden Überwachungsinformationen werden über das Fernwirkgerät zur Zentrale übertragen. Mehrere Netzbetriebsmittel sind jeweils zu einer Gruppe zusammengefaßt. Jeder Gruppe ist eine Adresse zugeordnet. Im Fernwirkgerät wird ein Gruppentelegramm erzeugt, das die Gruppenadresse und die Überwachungsinformationen der Netzbetriebsmittel der zugehörigen Gruppe enthält. Das Gruppentelegramm wird zur Zentrale übertragen, wo ein weiteres Fernwirkgerät die Auswertung und Verarbeitung der Überwachungsinformationen übernimmt. Bei einer Einzeländerung eines Betriebszustandes wird somit stets eine Gruppe von Überwachungsinformationen von Netzbetriebsmitteln einer Unterstation übertragen. Ein Nachteil ist, daß durch die Übertragung unproduktiver Redundanz und durch den hohen Aufwand bei der Auswertung die Bereitstellungsgeschwindigkeit der aktuellsten Betriebszustände in der Zentrale beeinträchtig wird.

Bei einer Flächenstörung im Fernwirknetz ist zur Beseitigung der Störung in der Zentrale eine stete Präsens der aktuellsten Betriebszustände von in Betrieb kritischen Netzbetriebsmitteln erforderlich. Durch das Zusammenfassen von Netzbetriebsmitteln zu Gruppen und durch das Übertragen von Gruppentelegrammen wird die stete Präsenz der aktuellsten Betriebszustände in der Zentrale aufgrund von umfangreich abzuarbeitenden Selektionsalgorithmen, beeinträchtigt und die Beseitigung der Störung erschwert.

Es ist deshalb Aufgabe der Erfindung ein Fernwirkgerät und eine Fernwirkeinheit zur Verfügung zu stellen, die es ermöglichen, die Bereitstellungsgeschwindigkeit von Steuer- und Überwachungsinformation in der Zentrale zu erhöhen.

Diese Aufgabe wird durch die Lehre der Patentansprüche 1 und 6 gelöst.

Vorteilhafte Ausgestaltungen sind den Unteransprüchen zu entnehmen.

Ein besonderer Vorteil der Erfindung liegt aufgrund der vereinfachten Kommunikation zwischen Unterstation und Zentrale in der Minimierung von Fehlern bei der Übertragung von Steuer- und Überwachungsinformationen.

Im folgenden wird die Erfindung anhand eines Ausführungsbeispiels unter Zuhilfenahme der Figuren 1 bis 3 erläutert. Es zeigen:
- Fig. 1: eine schematische Darstellung eines Fernwirknetzes FWN mit einem erfindungsgemäßen Fernwirkgerät und einer erfindungsgemäßen Fernwirkeinheit,
- Fig. 2: einen schematisch dargestellten Aufbau eines Protokolls des erfindungsgemäßen Fernwirkgerätes, und
- Fig. 3: eine Kategorietabelle für die mit dem erfindungsgemäßen Fernwirkgerät verbundenen Netzbetriebsmittel.

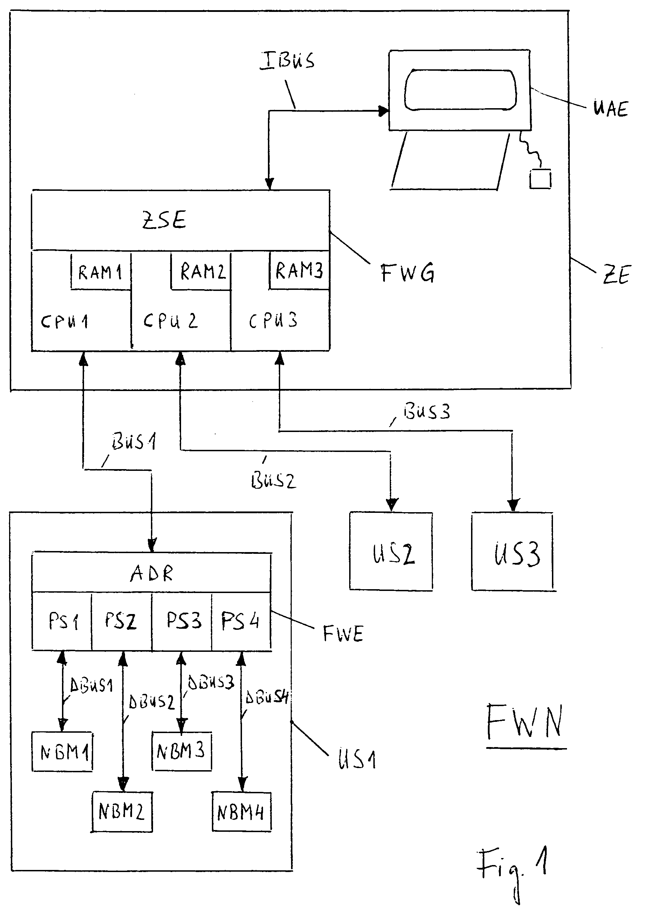

Das Ausführungsbeispiel der Erfindung wird nun anhand der Figuren 1 bis 3 beschrieben. Fig. 1 zeigt ein Fernwirknetz FWN mit einer Zentrale und mehreren Unterstationen. Das Fernwirknetz dient der Fernüberwachung und Fernsteuerung eines Versorgungsnetzes. Das Versorgungsnetz ist z.B. ein Energietransport- und/oder Energieverteilnetz, ein Wasser-, oder Gasversorgungsnetz. Die Zentrale ZE beinhaltet ein Fernwirkgerät FWG und eine Benutzerzugriffseinrichtung UAE. Das Fernwirkgerät FWG beinhaltet eine zentrale Steuereinrichtung ZSE, drei Recheneinheiten CPU1, CPU2, CPU3 und drei Speichereinheiten RAM1, RAM2, RAM3. Die zentrale Steuereinheit ZSE ist mit den drei Recheneinheiten CPU1, CPU2, CPU3 verbunden. Jede Recheneinheit CPU1, CPU2, CPU3 hat Zugriff auf eine ihr zugehörige Speichereinheit RAM1, RAM2, RAM3. Das Fernwirkgerät FWG ist über einen internen bidirektionalen Bus BUS mit der Benutzerzugriffseinrichtung UAE verbunden. Jede Recheneinheit CPU1, CPU2, CPU3 des Fernwirkgerätes FWG ist über eine separate bidirektionale Datenleitung BUS1, BUS2, BUS3 mit einer Unterstation US1, US2, US3 verbunden.

Die Unterstation US1 beinhaltet eine Fernwirkeinheit FWE und vier Netzbetriebsmittel NBM1, NBM2, NBM3, NBM4. Die Fernwirkeinheit FWE hat eine Adreßeinheit ADR und vier Wandlereinheiten PS1, PS2, PS3, PS4, die jeweils über einen bidirektionalen Datenbus DBUS1, DBUS2, DBUS3, DBUS4 mit einem Netzbetriebsmittel NBM1, NBM2, NBM3, NBM4 verbunden sind. Die Unterstationen US2 und US3 sind analog zur Unterstation US1 aufgebaut.

Das Netzbetriebsmittel NBM1 beinhaltet z.B. ein Leistungsschalter, das Netzbetriebsmittel NBM2 z.B. einen Leistungstransformator.

Jede Wandlereinheit PS1, PS2, PS3, PS4 wandelt die physikalischen Steuer- und Überwachungssignale des zugehörigen Netzbetriebsmittels NBM1, NBM2, NBM3, NBM4, die über den jeweiligen bidirektionalen Datenbus DBUS1, DBUS2, DBUS3, DBUS4 parallel übertragen werden, in digitale Steuer-und Überwachungssignale um und führt zusätzlich eine parallel/serielle Wandlung durch. Der so gewonnene serielle Datenstrom wird der Adreßeinheit ADR zugeführt. Des weiteren wird bei einer Übertragung von der Zentrale zu den Netzbetriebsmitteln NBM1, NBM2, NBM3, NBM4 der serielle Datenstrom aus der Adreßeinheit ADR in der jeweiligen Wandlereinheit in physikalische Steuer- und Überwachungssignale umgewandelt und dem jeweiligen Netzbetriebsmittel NBM1, NBM2, NBM3, NBM4 parallel zugeführt.

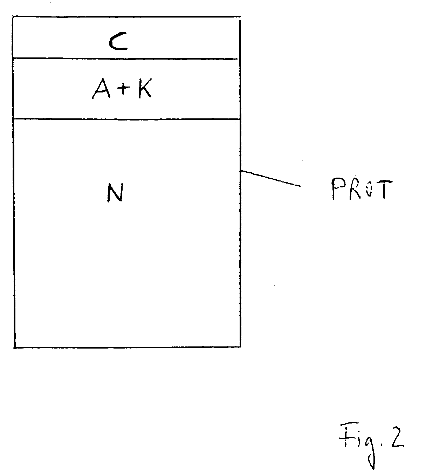

Die Adreßeinheit ADR beinhaltet z.B. Adreßregister, eine Steuereinheit, Zwischenspeicher und einen Multiplexer. Der endliche serielle Datenstrom eines jeden Netzbetriebsmittels NBM1, NBM2, NBM3, NBM4 wird in der Adreßeinheit ADR zunächst separat zwischengespeichert und dann gemultiplext in ein einheitliches Protokoll eingefügt. Das Protokoll wird in der Adreßeinheit ADR erzeugt und hat neben dem Nutzerdatenfeld für den seriellen Datenstrom der einzelnen Netzbetriebsmittel NBM1, NBM2, NBM3, NBM4 auch ein Adreß- und Kategoriefeld. Im Adreß- und Kategoriefeld wird zum einen eine fürjedes Netzbetriebsmittel NBM1, NBM2, NBM3, NBM4 spezifische Adresse, die in einem Adreßregister abgespeichert sein kann zur Identifikation des Netzbetriebsmittels NBM1, NBM2, NBM3, NBM4 und zum anderen ein Eintrag über eine Zuordnung zu einer vorgegebenen Kategorie eingetragen. Die Kategorie kann ebenfalls in einem Adreßregister, unter Umständen der Einfachheit halber zusammen mit der spezifischen, individuellen Adresse des jeweiligen Netzbetriebsmittels abgespeichert sein. Näheres zum Protokoll ist zu Fig. 2 beschrieben.

Die einzelnen Protokolle werden im Zeitmultiplexverfahren über die jeweiligen bidirektionalen Datenleitungen BUS1, BUS2, BUS3 zum Fernwirkgerät FWG übertragen. Im Fernwirkgerät FWG werden die Protokolle in den Recheneinheiten CPU1, CPU2, CPU3 ausgewertet und die Nutzerdaten verarbeitet. Dazu werden die Nutzerdaten z.B. mit Sollwerten, die in den Speichereinheiten RAM1, RAM2, RAM3 abgespeichert sind, verglichen. Bei Überschreiten eines Maximalwertes bzw. bei Unterschreiten eines Minimalwertes wird ein Alarm ausgelöst, der z.B. über den internen Bus IBUS auf der Benutzerzugriffseinrichtung UAE visuell dargestellt wird.

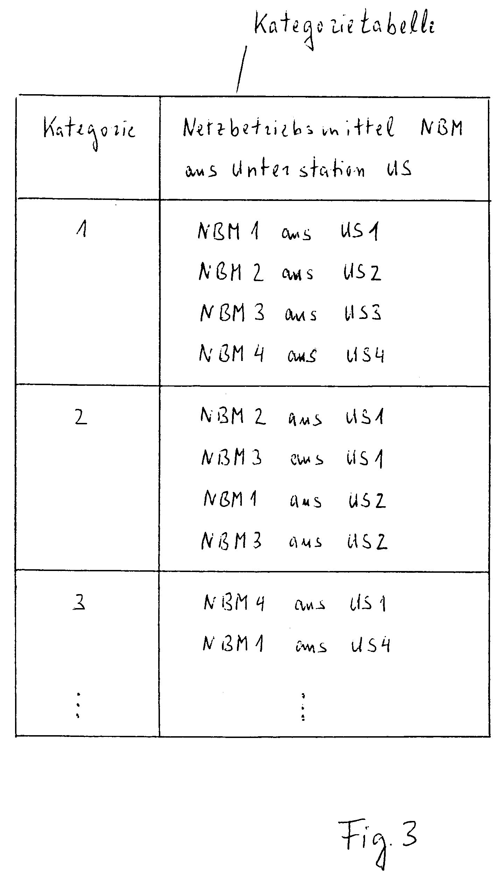

In der zentralen Steuereinrichtung ZSE ist ein Katalog abgespeichert, in dem alle mit dem Fernwirkgerät FWG verbundenen Netzbetriebsmittel NBM1, NBM2, NBM3, NBM4 aufgeführt sind. Jedes Netzbetriebsmittel NBM1, NBM2, NBM3, NBM4 ist einer Kategorie zugeordnet. Ein Beispiel für eine Zuordnung ist zu Fig. 3 aufgeführt. Die Auswahl der Zuordnung der Netzbetriebsmittel NBM1, NBM2, NBM3, NBM4 zu einer Kategorie erfolgt nach der Wichtigkeit des Netzbetriebsmittels NBM1, NBM2, NBM3, NBM3 in bezug auf die Aufrechterhaltung des Betriebs des Fernwirknetzes FWN. Kategorie 1 enthält z.B. alle für die Aufrechterhaltung eines Notbetriebes des Fernwirknetzes FWN zwingend erforderlichen Netzbetriebsmittel NBM, z.B. Hauptleistungschalter, Haupttransformatoren. Die Kategorien 2 bis n enthalten abgestuft Netzbetriebsmittel NBM, deren funktionelle Wichtigkeit für die Aufrechterhaltung des Fernwirknetzes FWN gegenüber der Netzbetriebsmittel NBM aus Kategorie 1 geringer ist. n ist eine natürliche Zahl, deren Größe von der Komplexität des Fernwirknetzes FWN und der Anzahl der Netzbetriebsmittel abhängt. Bei einer Störung im Fernwirknetz FWN werden daher zunächst die Betriebszustände der Netzbetriebsmittel aus Kategorie 1 überwacht. Dazu werden die Fernwirkeinheiten FWE über die zentrale Steuerungseinrichtung ZSE derart gesteuert, daß sie nur Protokolle übertragen, deren Nutzerdaten von Netzbetriebsmitteln, die der Kategorie 1 zugeordnet sind, stammen. Erst wenn keine Alarme mehr in Kategorie 1 auftreten, hervorgerufendurch geeignete, über die Benutzerzugriffseinrichtung UAE ausgelöste Steuerungssignale, werden die Betriebszustände der Netzbetriebsmittel der Kategorien 2 bis n überwacht.

Die Zuordnung von Netzbetriebsmitteln NBM zu Kategorien hat den Vorteil, daß Flächenstörungen schneller behebbar sind. So können z.B. die Betriebszustände von Netzbetriebsmitteln NBM unterschiedlicher Unterstationen US1, US2, US3, die unter Umständen 500 km weit auseinander liegen, jedoch zu einem über ein Kraftwerk gespeistes Stromversorgungsnetz angehören schneller erfaßt werden. Damit können auch schneller erforderliche Folgemaßnahmen, z.B. die Zuschaltung eines weiteren Kraftwerkes eingeleitet werden.

In der Benutzerzugriffseinrichtung UAE werden dem Benutzer die Steuer- und Überwachungsinformationen aller Netzbetriebsmittel visualisiert. Die Steuer- und Überwachungsinformationen beinhalten z.B. Alarme, Meßdaten, Konfigurationsdaten. Der Benutzer kann über die Benutzerzugriffseinrichtung UAE auf die Steuerung der Netzbetriebsmittel NBM eingreifen. Dazu kann er eine Kategorie auswählen und sogar jedes Netzbetriebsmittel NBM individuell ansteuern, da jedes Netzbetriebsmittel NBM eine individuelle Adresse hat.

Fig. 2 zeigt nun das Protokoll für die Datenübertragung zwischen Fernwirkgerät FWG und Fernwirkeinheit FWE. Das Protkoll PROT entspricht seinem Aufbau nach im wesentlichen dem Telegramm Format FT 1.1 nach DIN-Norm EN 60870-5-2, in der die Übertragungsprotokolle für Fernwirkeinrichtungen und -systeme genormt sind. Das Protokoll PROT wird in der Fernwirkeinheit FWE in der Adreßeinheit ADR und im Fernwirkgerät in den Recheneinheiten CPU erzeugt und ist in drei Bereiche unterteilt. Bereich 1 ist das Steuerfeld C. Im Steuerfeld sind z.B. Informationen darüber enthalten, ob das Protkoll Steuer- oder Überwachungsinformationen enthält. Bereich 2 ist das Adreß- und Kategoriefeld A+K. Das Adreß- und Kategoriefeld A+K enthält die Adressen der einzelnen Netzbetriebsmittel NBM und die Angabe der Kategorie, der das Netzbetriebsmittel zugordnet ist. Bereich 3 ist das Nutzerdatenfeld N. Im Nutzerdatenfeld N sind die Steuer- und /oder Überwachungsinformationen enthalten. Der Aufbau des Protkolls PROT beinhaltet nur die für die Übertragung wesentlichen Informationen. Zusätzlich kann z.B. ein Bereich, der Prüfdaten enthält, an das Protokoll angefügt werden.

Fig. 3 zeigt nun eine Kategorietabelle für die mit dem erfindungsgemäßen Fernwirkgerät FWG verbundenen Netzbetriebsmittel NBM. In der Kategorietabelle ist jedes mit dem Fernwirkgerät FWG verbundene Netzbetriebsmittel NBM einer Kategorie zugeordnet. So sind der Kategorie 1 z.B. die Netzbetriebsmittel NBM1 aus der Unterstation US1, NBM2 aus US2, NBM3 aus US3 und NBM4 aus US4 zugeordnet. Die Netzbetriebsmittel NBM der Kategorie 1 sind für die Aufrechterhaltung des Betriebs des Fernwirknetzes zwingend erforderlich, wie oben beschrieben. Die Kategorie 2 enthält z.B. die Netzbetriebsmittel NBM2 aus US1, NBM3 aus US1, NBM1 aus US2 und NBM3 aus US2. Die Kategorie 3 enthält z.B. die Netzbetriebsmittel NBM4 aus US1, NBM1 aus US4, etc. Die Anzahl der Kategorien und die Anzahl der Netzbetriebsmittel NBM einer Kategorie richtet sich nach dem strukturellen Aufbau des Fernwirknetzes. Der Aufbau der Kategorietabelle ist dynamisch und Software-gesteuert. Bei Erweiterung oder Verkleinerung des Fernwirknetzes, sowie bei einer Umstrukturierung desselben wird die Kategorietabelle neu erstellt und an die Veränderungen angepaßt.

Die Zuordnung der Netzbetriebsmittel NBM zu den Kategorien kann auch nach anderen als den obigen Gesichtspunkten erfolgen. So können z.B. alle Netzbetriebsmittel NBM eines Teilnetzes, das z.B. von einem Kraftwerk oder einem Wasserwerk oder einem Gaswerk gespeist wird, einer Kategorie zugeordnet werden. Des weiteren kann beim Beheben einer Störung im Fernwirknetz schon mit der Überwachung und Steuerung der Netzbetriebsmittel NBM der Kategorie 2 begonnen werden bevor die Störung in allen Netzbetriebsmitteln NBM der Kategorie 1 behoben ist. Dies macht das Beheben einer Störung dynamischer und zeitsparender. Es ist auch möglich, daß ein und dasselbe Netzbetriebsmittel NBM mehreren Kategorien gleichzeitig zugeordnet ist. Dies erhöht die Variationsmöglichkeit beim Beheben einer Störung.

Im Ausführungsbeispiel ist das Fernwirkgerät FWG in der Zentrale angeordnet. Das Fernwirkgerät FWG kann auch in einem Knoten des Fernwirknetzes angeordnet werden. Bei dem Aufbau des Fernwirknetzes als Baumstruktur ist ein Knoten mit mehreren Unterstationen und gegebenenfalls über weitere Knoten mit der Zentrale verbunden. Die Protokolle der verschiedenen Unterstationen werden gemultiplext zur Zentrale übertragen. Im Ausführungsbeispiel sind der Übersichtlichkeit halber keine Knoten eingefügt. In einem Knoten kann anstelle eines Fernwirkgerätes FWG auch eine Fernwirkeinheit FWE verwendet werden.

Im Ausführungsbeispiel ist das Fernwirkgerät FWG mit drei Unterstationen US1, US2, US3 und jede Unterstation US1, US2, US3 mit vier Netzbetriebsmitteln NBM1, NBM2, NBM3, NBM4 verbunden. Die Zahlenwerte der Unterstationen US1, US2, US3 und der Netzbetriebsmittel NBM1, NBM2, NBM3, NBM4 sind beispielhaft, so können an das Fernwirkgerät z.B. auch 100 Unterstationen mit je 100 Netzbetriebsmitteln und 200 Knoten angeschlossen werden.

## Patentansprüche

1. Fernwirkgerät (FWG) zur Fernüberwachung und/oder Fernsteuerung von Netzbetriebsmitteln (NBM) eines Versorgungsnetzes, mit einer zentralen Steuereinrichtung (ZSE), die mit mehreren Netzbetriebsmitteln (NBM) verbindbar ist, in der jedes Netzbetriebsmittel (NBM) durch eine individuelle Adresse identifizierbar und wenigstens einer Kategorie zuordbar ist, die Netzbetriebsmittel (NBM) durch Angabe einer Kategorie gruppenweise oder durch Angabe der individuellen Adresse individuell fernüberwachbar und/oder fernsteuerbar sind, und die Fernüberwachung und/oder Fernsteuerung abhängig von den Betriebszuständen der Netzbetriebsmittel (NBM) steuerbar ist.

2. Fernwirkgerät (FWG) nach Anspruch 1,
dadurch gekennzeichnet, daß die Fernüberwachung und Fernsteuerung durch ein im Fernwirkgerät (FWG) ein Protokoll (PROT), das die individuelle Adresse und die Angabe einer Kategorie des jeweiligen Netzbetriebsmittels (NBM) enthält, erzeugbar ist.

3. Fernwirkgerät (FWG) nach Anspruch 1,
dadurch gekennzeichnet, daß in der zentralen Steuereinrichtung (ZSE) Netzbetriebsmittel (NBM) einer vorgegebenen Kategorie auswählbar sind, und daß nur die ausgewählten Netzbetriebsmittel fernüberwachbar und ferngesteuerbar sind.

4. Fernwirkgerät (FWG) nach Anspruch 1,
dadurch gekennzeichnet, daß das Fernwirkgerät (FWG) in einer Zentrale angeordnet ist.

5. Fernwirkgerät (FWG) nach Anspruch 1,
dadurch gekennzeichnet, daß das Fernwirkgerät (FWG) in einem Knoten angeordnet ist.

6. Fernwirkeinheit (FWE) zur Fernüberwachung und/oder Fernsteuerung von Netzbetriebsmitteln (NBM) eines Versorgungsnetzes, mit einer Adreßeinheit (ADR), die mit mehreren Netzbetriebsmitteln (NBM) verbunden ist, in der jedes Netzbetriebsmittel (NBM) durch eine individuelle Adresse identifizierbar und wenigstens einer Kategorie zuordbar ist, in der ein Protokoll (PROT) erzeugbar ist, das die Nutzerdaten, die individuelle Adresse und die Angabe einer Kategorie des jeweiligen Netzbetriebsmittels (NBM) enthält, und in der die Übertragung von Nutzerdaten von Netzbetriebsmitteln (NBM), die nicht einer vorgegebenen Kategorie zuordbar sind, unterdrückbar ist.

7. Fernwirkeinheit (FWE) nach Anspruch 6,
dadurch gekennzeichnet, daß die Fernwirkeinheit (FWE) in einer Unterstation (US) angeordnet ist.

8. Fernwirkeinheit (FWE) nach Anspruch 1,
dadurch gekennzeichnet, daß die Fernwirkeinheit (FWE) in einem Knoten angeordnet ist.
